# EUROPEAN PATENT SPECIFICATION

(11) **EP 2 202 441 B1**
(45) Date of publication and mention of the grant of the patent: **19.03.2014**
(21) Application number: 09180483.1
(22) Date of filing: 22.12.2009
(51) Int. Cl.: F16L 27/12, F16L 37/084, F24D 3/10

(54) **Joint for pipes connection**
Kupplung zum Verbinden von Rohren
Raccord pour la connexion des tuyaux

(30) Priority: 23.12.2008 IT TO20080984
(43) Date of publication of application: 30.06.2010
(73) Proprietor: Pres-Block S.P.A., 10040 Caselette (IT)
(72) Inventor: Nicolino, Aldo, 10040, CASELETTE (IT)
(74) Representative: D'Angelo, Fabio

(56) References cited:
- WO-A1-2007/045033
- DE-A1-102004 012 817
- GB-A- 824 986
- GB-A- 1 438 743
- JP-A- 2000 320 759
- US-A- 3 669 472
- US-A- 5 511 830
- US-A1- 2006 128 180

## Description

The present invention refers to a joint for connecting pipes of a heating and/or air conditioning system.

In the above mentioned systems, the circulation piping of heating or air conditioning liquid, generally water, are often arranged along the ceiling or the floor. As known, the piping must be connected at one part to an output manifold (or an intake manifold) in turn connected to a heat exchanger, a boiler for example, and at the other end to a return manifold also connected, for example, to the boiler. Normally, the piping is of a rigid material (metallic for example) or in a semi-rigid material, plastics for example, such as crosslinked polyethylene.

Each piping is first connected at its own end, to a relative joint that then must be screwed onto a corresponding mouth on the output manifold and then extended onto a layer of insulating material attached to the ceiling or floor. Then, the portion of the opposite end of the above mentioned piping is in turn connected to another threaded connection, which must then be screwed onto a corresponding mouth on the return manifold.

This type of assembly requires that the individual pipes are precisely cut to the correct length for the connection to both manifolds; a possible error can make the attachment of the piping especially difficult, given the relative stiffness of the latter which is only slightly deformable.

Moreover, even if the necessary precision is provided for the assembly between the manifolds and the piping, possible lengthening of the latter when in use due to thermal expansion can cause undesired stress which may also cause breakage over time.

It should further be noted that the screwing and eventual unscrewing operations between each joint and the relative manifold prove to be quite difficult, since normally the space available for the technician to apply the necessary rotations is quite limited.

US 1,438,743 discloses a joint as defined in the preamble of claim 1.

The purpose of the invention is to create a joint for connecting pipes which is highly reliable, affordable and eliminates at least some of the drawbacks listed above associated with known joints.

According to the invention, this aim is achieved by a connecting joint, as defined by claim 1.

For a better understanding of the invention, described herein is a preferred embodiment, made by way of example by means of the attached drawings, in which:
Figure 1 is a section of a manifold of a heating or air conditioning system to which joints are connected according to the invention;
Figure 2 is a section of a connection joint, taken along the line II-II of Figure 1, and in an enlarged scale;
Figure 3 is a section along the line III-III of Figure 2;
Figure 4 is an exploded section of Figure 2;
Figure 5 is a section of a joint in an intermediate connecting step between that of Figure 2 and that of Figure 4;
Figure 6 is an isometric view of the joint of Figure 5; and
Figure 7 is a section of an alternative connection joint.

A heating or air conditioning system in each room of modern buildings, includes piping formed by a series of liquid circulation pipes, usually water, which are arranged along the floor or ceiling, preferably on a layer of thermally insulating material, upon which they are attached. These pipes must be connected between an output manifold and an intake manifold in communication with a central heating or air conditioning system.

The pipes are usually made of a reinforced plastic material having a low coefficient of expansion, while the two manifolds are usually made of metal. The two manifolds are generally arranged parallel to each other in a predetermined position, so that each pipe to be connected must be cut at a predetermined length. Any difference in the actual length of each pipe, compared to the theoretical length, generates difficulties when connecting it to at least one of the manifolds. Furthermore, it generates other difficulties during operation, for example due to thermal expansion.

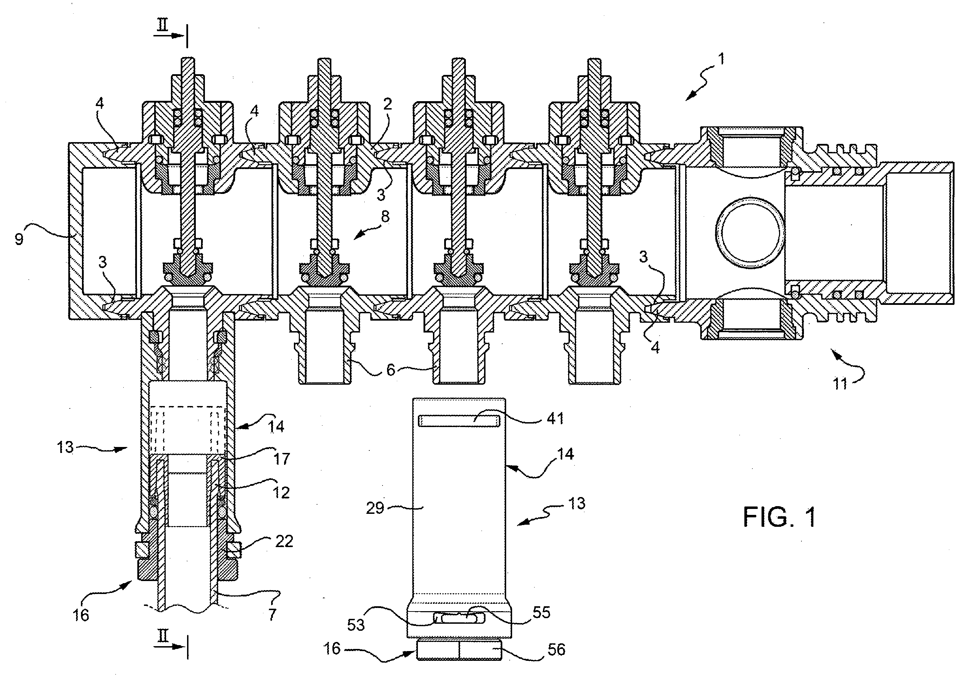

With reference to Figure 1, a portion of a manifold for the circulation of a liquid, such as water for heating or cooling an environment, is generically indicated as 1. In particular, the manifold 1 is formed by a series of annular elements 2, having axially: at one part an annular notch 3 having a tapered section, and on the other an annular edge 4, having a tapered section complementary to the notch 3. Each annular element 2 bears a radial element, consisting of a mouth 6 for attachment of a corresponding water circulation pipe end 7. Each element 2 is also equipped with a control valve 8, known in itself, adapted to open the mouth 6 in case of emergency.

Each annular element 2 of the manifold 1 is connected to the adjacent elements 2, inserting the relative annular edge 4 in the annular notch 3 of the preceding element 2 above (on the left in Figure 1). Each edge 4 can be attached in the relative notch 3 by known means, like a screw or bolt or by welding, not shown in Figure 1. The edge 4 of the first annular element 2 (on the left in Figure 1) is connected to a plug 9 having its own annular notch 3 equal to that of elements 2, while the annular notch 3 of the last element 2 (on the right in figure 1) is connected to a connecting group 11 having its tapered edge 4 equal to that of elements 2. The group 11 is capable of being connected to the boiler, in a known manner.

An end portion 12 of each pipe 7 is attached to the mouth 6 of a corresponding annular element 2 of the manifold 1 by a joint generally indicated as 13.

According to an important aspect of the present invention, the joint 13 comprises a first tubular element 14 adapted to be attached to the mouth 6 of the annular element 2, and a second tubular element 16 connectable to the end portion 12 of the pipe 7 and adapted to be sealingly engaged on the tubular element 14 in an axially mobile position within a predetermined spatial region.

In this way, any differences in the length of the pipe 7 with respect to the preset theoretical length can be recuperated by way of axial sealed sliding of the tubular element 16 with respect to the tubular element 14.

On the left of Figure 1 a sectioned joint 13 is shown, already connected to the respective mouth 6, and centrally, a joint 13 in an external view unconnected to the respective mouth 6.

In the case illustrated, the tubular element 16 is designed as a male element of the joint 13, and is adapted to be engaged onto the tubular element 14, which is designed as a female element of the joint 13.

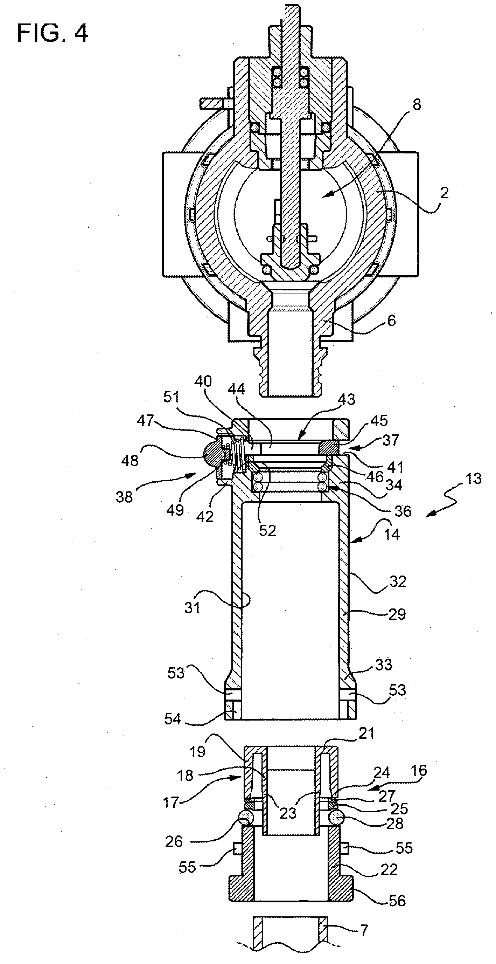

In greater detail, the tubular element 16 comprises a sleeve 17 (Figure 4) adapted to receive an end portion 12 of pipe 7, between an inner cylindrical wall 18 and an outer cylindrical wall 19. The two cylindrical walls 18 and 19 are coaxial and are connected together by an annular rib 21 defining the axial position of the end portion 12, with respect to the two cylindrical walls 18 and 19.

A locking bushing 22, separated from the sleeve 17, is attachable in a predetermined axial position onto the tubular element 14 in such a way as to allow the axial sliding of the sleeve 17 with respect to said tubular element 14 towards the portion thereof connected to the mouth 6 and in such a way as to prevent the detachment of said sleeve 17 from the tubular element 14.

The inner wall 18 of sleeve 17 has an outer surface having a tapered portion 23 corresponding to an edge 24 of the outer wall 19. Axially, between the edge 24 of outer wall 19 and an edge 26 of the bushing 22 a metallic annular locking element 27 having an internal area in the form of flexible fins, which engage the portion 12 of the pipe 7 is disposed. The locking element 27 has a slightly frustoconical shape with the smaller section facing the annular rib 21 of the sleeve 17, so as to allow the axial sliding of the portion 12 of the pipe 7 towards the said rib 21 and prevent the extraction of the pipe 7 in the opposite direction.

Finally, between the locking element 27 and the edge 26 of the bushing 22 is disposed a shaped metal ring 25 and a sealing annular gasket 28 of elastically deformable material.

The tubular element 14 of joint 13 is formed by a sleeve 29 having an inner cylindrical surface 31 and a outer surface 32 which at one of its extremities forms a reinforced edge 33. The sleeve 29 presents, opposite the edge 33, a portion 34 internally shaped, which is modeled for fitting the mouth 6, with the interposition of a gasket, indicated as a whole with 36.

Based on the foregoing, the said spatial region of movement of the tubular element 16 with respect to the tubular element 14 is axially delimited by opposite parts of the locking bushing 22 and by the shaped end portion 34 of the tubular element 14.

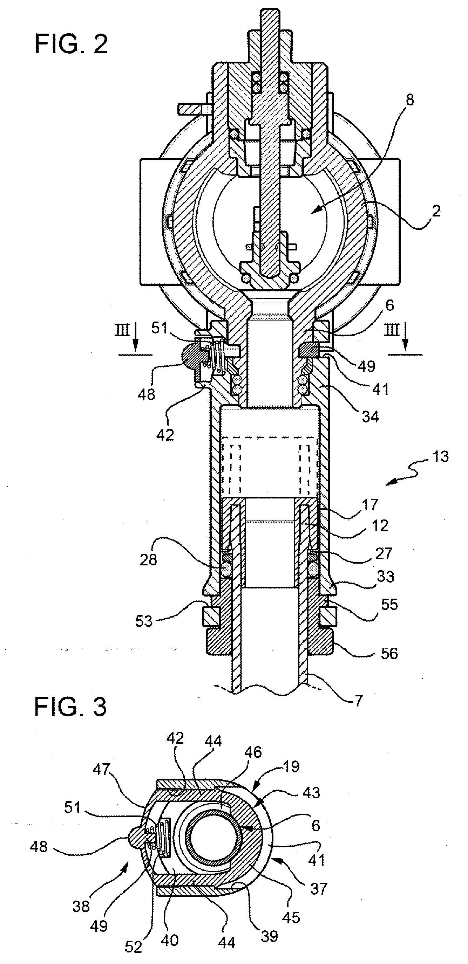

The shaped portion 34 has a radial seat 37 (see also Figure 3), in which a snap fit mechanism 38 for the connection to the mouth 6 is disposed. In particular, the radial seat 37 comprises two parallel grooves 39 inside the sleeve 29, which end with two openings 40 and 41 of the sleeve 29 in the form of two circumferential slots, diametrally opposed to each other. In correspondence to the opening 40, the sleeve 29 has a rectangular shaped window 42 projecting outward.

The snap fit mechanism 38 comprises a frame 43 formed by two parallel sides 44 sliding in the guides 39 and an arc of a circle-shaped crossed member 45, which, in use, is adapted to engage an annular groove 46 of mouth 6. Finally, the frame 43 has a curved plate 47 coaxial with the sleeve 29, which is integral with the sides 44 and opposed to the cross member 45. The plate 47 is adapted to slide into the window 42, so that the frame 43 functions like a drawer, closing the window 42.

The plate 47 is provided with an external protrusion in the form of an button 48 capable of being pushed by a technician's finger. The plate 47 is internally provided with a pin 49, adapted to keep in place a flexible element formed by a helical frustoconical compression spring 51. The spring 51 is housed in a recess 52 of the sleeve 29, and is arranged with the smaller diameter end abutting against the plate 47 and the larger diameter end abutting against the recess 52, therefore, normally holding the cross member 45 in engagement with the groove 46, locking the sleeve 29 on the respective mouth 6, in the position of Figure 2.

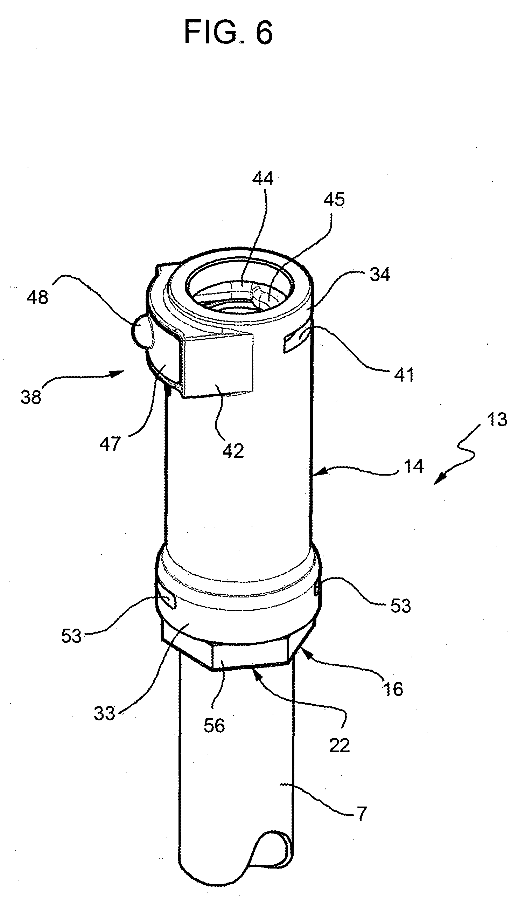

The edge 33 of sleeve 29 has two substantially circumferential slit 53, each correspondingly disposed with an axial groove 54 in the inner surface 31, so as to form, with the slit 53, a reversed L shape. The bushing 22 has two radial appendixes 55 projecting radially from the bushing 22 and adapted to engage in a bayonet fashion the slit 53 through the grooves 54. The slits 53 have a slightly curved shape (see also Figure 1), in order to allow, with the rotation of the bushing 22, a tightening of the bayonet connection. The bushing 22 also presents a prismatic sectioned end portion 56 (see also Figure 6), for example hexagonal, allowing the connection and disconnection of the bushing 22 with the sleeve 29, through the use of a special wrench.

The connection of the pipe 7 to the respective mouth 6 of the manifold 1 is made as follows.

First, the tubular elements 14 and 16 are supplied to the technician in a pre-assembly kit, in which the sleeve 17, the locking element 27, the shaped ring 25 the annular gasket 28 are inserted into the sleeve 29 of the tubular element 14 and are locked therein through engagement between the bushing 22 and the sleeve 29 itself. In particular, the bushing 22 is inserted into the sleeve 29, in such a way that the two radial appendages 55 engage the corresponding grooves 54, until reaching the corresponding slits 53; the simple rotation of the bushing 22, possibly by means of a wrench, therefore determines the bond between the tubular element 16 and the tubular element 14.

Once the manifold 1 is put into operation and the pipe 7 is arranged at the desired length, the portion 12 of the pipe 7 is inserted within the tubular elements 16 and 14 provided in the pre-assembly kit (see Figure 4).

The portion 12 of pipe 7 slides within the annular gasket 28, the shaped ring 25 and the locking element 27 to then be inserted between the two walls 18 and 19 of sleeve 17 until its end rests against the annular rib 21. The fins of the locking element 27, due to their configuration, allow the sliding of the pipe 7 towards the interior of the tubular elements 14 and 16 but do not allow withdrawal in the opposite direction.

During the aforesaid sliding, the annular gasket 28 is thus compressed between the outer surface of portion 12 of the pipe 7 and the inner surface 31 of sleeve 29, ensuring the sealing of the joint 13.

Given the possibility of axial movement of the tubular element 16 with respect to the tubular element 14, the portion 12 of the pipe 7 may possibly continue to slide along with the sleeve 17 inside the sleeve 29 until settling automatically in the position corresponding to its actual length. In this way, the pipe 7 can be cut to a variable length within a range depending on the axial distance between the locking bushing 22 and end portion 34 of the tubular element 14.

At this point, the assembly formed by the tubular element 14, the tubular element 16, the locking bushing 22 and the pipe 7 is snap fitted to the mouth 6. By pressing the button 48 or by simply pushing the tubular element 14 towards the mouth 6, the frame 43 is moved against the action of the spring 51, so as to allow full insertion of the mouth 6 in the end portion 34 of the tubular element 14. The cross member 45 of the frame 43 is then brought in correspondence with the groove 46 of the mouth 6, so that when releasing the button 48 the spring 51 triggers the frame 43 towards the window 42, engaging the cross member 45 within the groove 46 of the mouth 6.

It is also to be noted that the sleeve 29 may be inserted and locked onto the mouth 6 at any angular position, therefore, the operation is very simple, especially since it requires no rotation of any component.

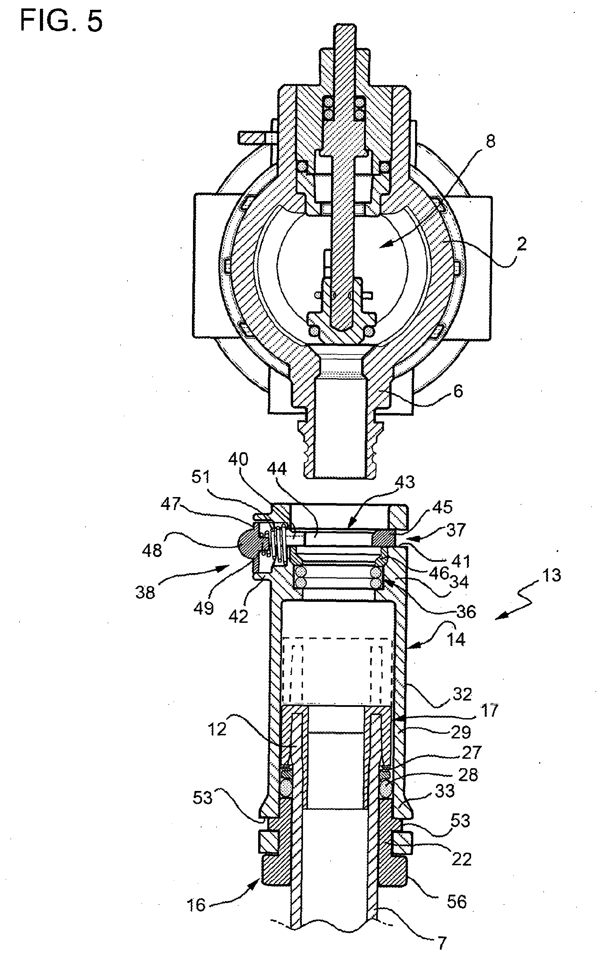

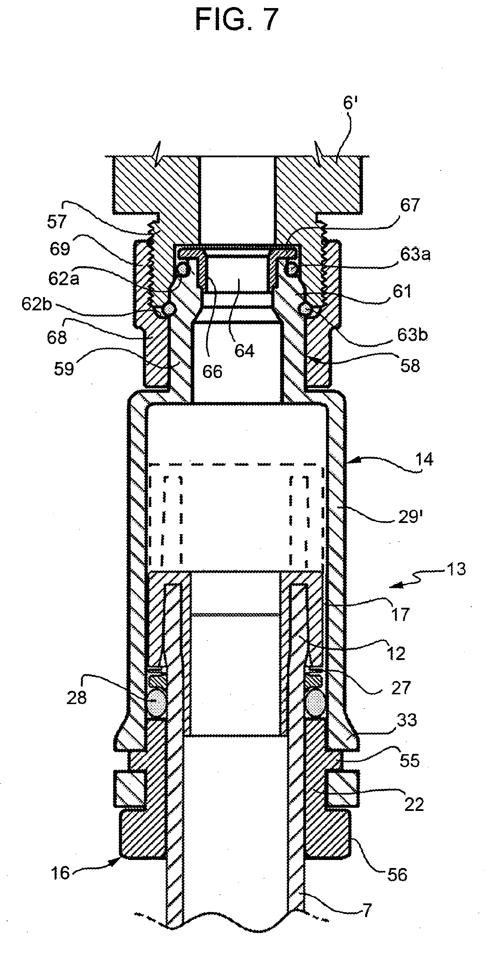

In the variant of Figure 7, parts similar to those of the variant of Figures 1-6 are indicated with the same reference numbers and will not be further described. In the variant of Figure 7, the mouth 6' ends with an externally threaded portion 57 and an inner surface having two portions of different diameter.

The tubular element 14 of joint 13 is formed by a sleeve 29', which is equipped with a connecting portion 58 having a cylindrical area 59 of a reduced diameter, and a contoured area 61, upon which are provided two annular seats 62a, 62b adapted to receive respectively a gasket 63a, for example of the o-ring type, and a retaining ring 63b.

The connecting portion 58 is also provided with a ring 64 having an inverted L-shaped section, with an axial wing 66 and a radial wing 67. The axial wing 66 is attached to the inner surface of the area 61, while the radial wing 67 locks the gasket 63b in its seat 62a.

Upon the cylindrical zone 59 of the connecting portion 58 is mounted a threaded ring 68, held in position between the retaining ring 63b and an annular shoulder settled between the connecting portion 58 and the remaining part of the tubular element 14; the threaded ring 68 presents an internally threaded portion 69, which is adapted to engage with the threaded portion 57 of the mouth 6'.

In the variant of Figure 7, the connection of the pipe 7 with the tubular elements 14 and 16, already pre-assembled, takes place in a completely identical way to that described above relative to the embodiment of Figures 1-6; whereas, regarding the final connection assembly thus formed on the mouth 6', one needs to simply screw the threaded ring 68 to the threaded portion 57, in such a way that the gasket 63a is compressed against the actual inner surface of the portion 57, as shown in Figure 7.

It is understood that, several other changes and improvements may be made to the described joint 13 without going beyond the scope of the claims. For example, the snap fit mechanism 38 may be a contact clip instead of a frame.

## Claims

1. A joint (13) for the connection of a pipe (7) of a heating and/or air-conditioning system to a mouth (6, 6') of a manifold (1) of the system itself, the joint (13) comprising:
- a first tubular element (14) having an end portion (34, 58) that may be attached to said mouth (6, 6'); and
- a second tubular element (16) adapted to be connected to an end portion (12) of said pipe (7) and to be sealingly engaged on said first tubular element (14) in an axially displaceable position within a predetermined spatial region;
wherein said first and second tubular element (14, 16) are a female and a male element respectively;
wherein said second tubular element (16) comprises a sleeve (17) adapted to receive said end portion (12) of said pipe (7) and coupled in an axially displaceable manner to said first tubular element (14);
wherein a locking bushing (22), separated from said sleeve (17), is provided, which is attachable in a predetermined axial position on said first tubular element (14) and is adapted to allow the axial sliding of said sleeve (17) with respect to said first tubular element (14) towards said end portion (34, 58) of the first tubular element (14) and to prevent the detachment of said sleeve (17) from said first tubular element (14);
wherein said spatial region is axially delimited on opposite parts by said locking bushing (22) and by said end portion (34, 58) of said first tubular element (14);
**characterised in that** said sleeve (17) has an inner cylindrical wall (18) and an outer cylindrical wall (19) between which said end portion (12) of said pipe (7) is adapted to be inserted, and **in that** said cylindrical walls (18, 19) are connected one to the other by means of an annular element (21) adapted to delimit the axial position of said end portion (12) of said pipe (7) with respect to said cylindrical walls (18, 19).

2. The joint according to claim 1, wherein said bushing (22) is adapted to be connected to said first tubular element (14) by means of releasable engagement means (53-55).

3. The joint according to claim 2, wherein said engagement means comprise a bayonet joint (53-55).

4. The joint according to any of the preceding claims, wherein an annular gasket (28) is inserted between said sleeve (17) and said first tubular element (14).

5. The joint according to any of the preceding claims, wherein said second tubular element (16) comprises an elastic annular locking element (27) for preventing said end portion (12) of said pipe (7) from being withdrawn from said sleeve (17).

6. The joint according to any of the preceding claims, wherein it comprises a snap fit mechanism (38) for the connection of said end portion (34) of said first tubular element on said mouth (6).

7. The joint according to claim 6, wherein said snap fit mechanism (38) comprises a frame (43) having two parallel sides (44) that may slide on a radial seat (37) of said end portion (34) of said first tubular element (14), a cross member (45) for the connection of said sides (44) being normally engaged with an annular groove (46) of said mouth (6) by a spring (51).

8. The joint according to claim 7, wherein said frame (43) comprises, on the side diametrically opposite to said cross member (45), a release button (48) that is elastically loaded by said spring (51).

9. The joint according to any of claims 1 to 5, wherein said end portion (58) of said first tubular element (14) bears a threaded ring (68) adapted to be screwed on a threaded portion (57) of said mouth (6').

## Patentansprüche

1. Eine Kupplung (13) für die Verbindung eines Rohres (7) eines Heizungs- und/oder Klimaanlagensystems mit einem Mundstück (6, 6') eines Verteilers (1) des Systems selbst, wobei die Kupplung (13) umfasst:
- ein erstes rohrförmiges Element (14) mit einem Endabschnitt (34, 58), der an dem Mündstück (6, 6') angebracht werden kann; und
- ein zweites rohrförmiges Element (16), das dazu ausgestaltet ist, mit einem Endabschnitt (12) des Rohres (7) verbunden zu werden und abdichtend an dem ersten rohrförmigen Element (14) in einer axial verschiebbaren Position innerhalb eines festgelegten Raumbereiches anzugreifen;
wobei das erste und zweite rohrförmige Element (14, 16) ein weibliches bzw. ein männliches Element sind;
wobei das zweite rohrförmige Element (16) eine Hülse (17) aufweist, die dazu ausgestaltet ist, den Endabschnitt (12) des Rohres (7) aufzunehmen und in einer axial verschiebbaren Weise mit dem ersten rohrförmigen Element (14) gekoppelt ist;
wobei eine Verriegelungshülse (22), die von der Hülse (17) getrennt ist, vorgesehen ist, die in einer bestimmten axialen Position an dem ersten rohrförmigen Element (14) anbringbar und dazu ausgestaltet ist, das axiale Gleiten der Hülse (17) relativ zu dem ersten rohrförmigen Element (14) in Richtung dem Endabschnitt (34, 58) des ersten rohrförmigen Elements (14) zu gestatten, und das Lösen der Hülse (17) von dem ersten rohrförmigen Element (14) zu verhindern;
wobei der Raumbereich an gegenüberliegenden Teilen durch die Verriegelungshülse (22) und durch den Endabschnitt (34, 58) des ersten rohrförmigen Elements (14) axial begrenzt wird;
**dadurch gekennzeichnet, dass** die Hülse (17) eine innere zylindrische Wand (18) und eine äußere zylindrische Wand (19) aufweist, zwischen denen der Endabschnitt (12) des Rohres (7) einsetzbar ist, und dass die zylindrischen Wände (18, 19) miteinander mit Hilfe eines ringförmigen Elements (21) verbunden sind, das dazu ausgestaltet ist, die axiale Position des Endabschnitts (12) des Rohres (7) relativ zu den zylindrischen Wänden (18, 19) zu begrenzen.

2. Die Kupplung nach Anspruch 1, wobei die Hülse (22) dazu ausgestaltet ist, mit Hilfe lösbarer Eingriffsmittel (53-55) mit dem ersten rohrförmigen Element (14) verbunden zu werden.

3. Die Kupplung nach Anspruch 2, wobei das Eingriffsmittel eine Bajonettverbindung (53-55) aufweist.

4. Die Kupplung nach einem der vorhergehenden Ansprüche, wobei eine ringförmige Dichtung (28) zwischen der Hülse (17) und dem ersten rohrförmigen Element (14) eingesetzt ist.

5. Die Kupplung nach einem der vorhergehenden Ansprüche, wobei das zweite rohrförmige Element (16) ein elastisches ringförmiges Verriegelungselement (27) aufweist, um zu verhindern, dass der Endabschnitt (12) des Rohres (7) aus der Hülse (17) entfernt wird.

6. Die Kupplung nach einem der vorhergehenden Ansprüche, wobei sie einen Schnappmechanismus (38) zur Verbindung des Endabschnitts (34) des ersten rohrförmigen Elements mit dem Mundstück (6) aufweist.

7. Die Kupplung nach Anspruch 6, wobei der Schnappmechanismus (38) einen Rahmen (43) mit zwei parallelen Seiten (44), die auf einem radialen Sitz (37) des Endabschnitts (34) des ersten rohrförmigen Elements (14) gleiten können, aufweist, wobei ein Kreuzelement (45) für die Verbindung der Seiten (44) normalerweise mit einer Ringnut (46) des Mundstücks (6) über eine Feder (51) in Eingriff steht.

8. Die Kupplung nach Anspruch 7, wobei der Rahmen (43) an der Seite diametral gegenüber dem Kreuzelement (45) eine Freigabeschalter (48) aufweist, der durch eine Feder (51) elastisch vorgespannt ist.

9. Die Kupplung nach einem der Ansprüche 1 bis 5, wobei der Endabschnitt (58) des ersten rohrförmigen Elements 14) einen Gewindering (68) trägt, der dazu ausgestaltet ist, auf einen Gewindeabschnitt (57) des Mundstücks (6') aufgeschraubt zu werden.

## Revendications

1. Joint (13) pour le raccordement d'un tuyau (7) d'un système de chauffage et/ou de conditionnement d'air à une bouche (6, 6') d'un collecteur (1) du système lui-même, le joint (13) comprenant :
un premier élément tubulaire (14) ayant une partie d'extrémité (34, 58) qui peut être fixée à ladite bouche (6, 6') ; et
un second élément tubulaire (16) adapté pour être raccordé à une partie d'extrémité (12) dudit tuyau (7) et pour être mis en prise de manière étanche sur ledit premier élément tubulaire (14) dans une position qui peut être déplacée axialement à l'intérieur d'une région spatiale prédéterminée ;
dans lequel lesdits premier et second éléments tubulaires (14, 16) sont un élément femelle et un élément mâle respectivement ;
dans lequel ledit second élément tubulaire (16) comprend un manchon (17) adapté pour recevoir ladite partie d'extrémité (12) dudit tuyau (7) et couplé de manière à pouvoir être déplacé axialement par rapport audit premier élément tubulaire (14) ;
dans lequel on prévoit une douille de verrouillage (22), séparée dudit manchon (17), qui peut être fixée dans une position axiale prédéterminée sur ledit premier élément tubulaire (14) et qui est adaptée pour permettre le coulissement axial dudit manchon (17) par rapport audit premier élément tubulaire (14) vers ladite partie d'extrémité (34, 58) du premier élément tubulaire (14) et pour empêcher le détachement dudit manchon (17) par rapport audit premier élément tubulaire (14) ;
dans lequel ladite région spatiale est délimitée axialement sur des parties opposées par ladite douille de verrouillage (22) et par ladite partie d'extrémité (34, 58) dudit premier élément tubulaire (14),
**caractérisé en ce que** ledit manchon (17) a une paroi interne cylindrique (18) et une paroi externe cylindrique (19) entre lesquelles ladite partie d'extrémité (12) dudit tuyau (7) est adaptée pour être insérée, et **en ce que** lesdites parois cylindriques (18, 19) sont raccordées l'une à l'autre au moyen d'un élément annulaire (21) adapté pour délimiter la position axiale de ladite partie d'extrémité (12) dudit tuyau (7) par rapport auxdites parois cylindriques (18, 19).

2. Joint selon la revendication 1, dans lequel ladite douille (22) est adaptée pour être raccordée audit premier élément tubulaire (14) au moyen de moyens de mise en prise amovible (53-55).

3. Joint selon la revendication 2, dans lequel lesdits moyens de mise en prise comprennent un joint à baïonnette (53-55).

4. Joint selon l'une quelconque des revendications précédentes, dans lequel une garniture annulaire (28) est insérée entre ledit manchon (17) et ledit premier élément tubulaire (14).

5. Joint selon l'une quelconque des revendications précédentes, dans lequel ledit second élément tubulaire (16) comprend un élément de verrouillage annulaire élastique (27) pour empêcher que ladite partie d'extrémité (12) dudit tuyau (7) ne soit retirée dudit manchon (17).

6. Joint selon l'une quelconque des revendications précédentes, dans lequel il comprend un mécanisme d'ajustement par pression (38) pour le raccordement de ladite partie d'extrémité (34) dudit premier élément tubulaire sur ladite bouche (6).

7. Joint selon la revendication 6, dans lequel ledit mécanisme d'ajustement par pression (38) comprend un châssis (43) ayant deux côtés parallèles (44) qui peuvent coulisser sur un siège radial (37) de ladite partie d'extrémité (34) dudit premier élément tubulaire (14), une traverse (45) pour le raccordement desdits côtés (44) étant normalement mise en prise avec une rainure annulaire (46) de ladite bouche (6) par un ressort (51).

8. Joint selon la revendication 7, dans lequel ledit châssis (43) comprend, du côté diamétralement opposé à ladite traverse (45), un bouton de libération (48) qui est chargé élastiquement par ledit ressort (51).

9. Joint selon l'une quelconque des revendications 1 à 5, dans lequel ladite partie d'extrémité (58) dudit premier élément tubulaire (14) porte une bague filetée (68) adaptée pour être vissée sur une partie filetée (57) de ladite bouche (6').
